# EUROPEAN PATENT APPLICATION

(11) **EP 2 907 612 A2**
(43) Date of publication of application: **19.08.2015**
(21) Application number: 15155431.8
(22) Date of filing: 17.02.2015
(51) Int. Cl.: B23K 26/06, B23K 26/38

(54) **Laser processing method**

(30) Priority: 18.02.2014 JP 2014028268
(71) Applicant: AISIN SEIKI KABUSHIKI KAISHA, Kariya-shi, Aichi 448-8650 (JP)
(72) Inventor: Ota, Michiharu, Kariya-shi, Aichi 448-8650 (JP); Takahashi, Hidetomo, Kariya-shi, Aichi 448-8650 (JP); Sakakibara, Shinya, Kariya-shi, Aichi 448-8650 (JP); Itoigawa, Fumihiro, Nagoya-shi, Aichi 466-8555 (JP); Ono, Shingo, Nagoya-shi, Aichi 466-8555 (JP)
(74) Representative: D Young & Co LLP

(57) **Abstract**

A laser processing method includes steps of providing a mask material (12, 12a, 12b, 12c) of which thickness is equal to or greater than 10 µm onto an object (10, 10a), and forming a hole (16, 16a) in the object (10, 10a) or cutting the object (10, 10a) in a state where the mask material (12, 12a, 12b, 12c) is provided on the object (10, 10a), in a manner that an ultrashort-pulse laser light is irradiated from above the object (10, 10a) and an opening portion (14, 14a) is formed at the mask material (12, 12a, 12b, 12c) to penetrate the mask material (12, 12a, 12b, 12c) while ablation processing is performed to a portion of the object (10, 10a) by the ultrashort-pulse laser light, the portion of the object (10, 10a) being below the opening portion (14, 14a).

## Description

### TECHNICAL FIELD

This disclosure generally relates to a laser processing method.

### BACKGROUND DISCUSSION

As a known technique of forming or making a hole in an object, a mechanical hole-forming processing with, for example, a drill is known.

According to the mechanical hole-forming processing, however, it is not easy to form a fine hole including a diameter from several µm to several tens of µm in hard brittle material.

On the other hand, fine processing can be performed relative to the object with the use of photolithographic technique and etching.

However, forming a deep hole with the photolithographic technique and the etching requires a long period of time, and thus productivity is low. In addition, the processing with the use of the photolithographic technique and the etching involves an extremely complicated process.

Accordingly, a technique of forming or making a hole in an object by irradiating laser beam to the object has received attention. With the use of the laser beam, the hole can be formed in the object in a short period of time and in a simple process. In addition, a technique of cutting an object with the use of the laser beam has also received attention. For example, see JP3012926B, JP2002-210730A, JP2011-37707A, JP2006-140311A, which will be hereinafter referred to as Patent reference 1, Patent reference 2, Patent reference 3 and Patent reference 4, respectively, and Radley W. Olson and William C. Swope, "Laser drilling with focused Gaussian beams", J. Appl. Phys. 72, 3686 (1992) which will be hereinafter referred to as Non-patent document 1.

However, in a case where the processing is performed on the object simply by delivering the laser beam to the object, a processed shape includes a tapered configuration. That is, in a case where the hole is formed in the object by means of irradiation of the laser beam to the object, the formed hole includes a shape of which an upper portion is widely opened. In addition, in a case where the object is cut by means of irradiation of the laser beam to the object, a processed width is largely widened in a vicinity of an upper surface of the object. In addition, in a case where the processing is performed on the object simply by irradiating the laser beam thereto, a surface of the object in a vicinity of a processed portion needs to be prevented from having adverse influences. For example, it is desirable that a crack and/or chipping are not generated at the object in a vicinity of the processed portion, and debris does not adhere to the surface of the object in a vicinity of the processed portion.

A need thus exists for a laser processing method in which a fine and appropriate laser processing may be performed.

### SUMMARY

According to an aspect of this disclosure, a laser processing method includes steps of providing a mask material of which thickness is equal to or greater than 10 µm onto an object, and forming a hole in the object or cutting the object in a state where the mask material is provided on the object, in a manner that an ultrashort-pulse laser light is irradiated from above the object and an opening portion is formed at the mask material to penetrate the mask material while ablation processing is performed to a portion of the object by the ultrashort-pulse laser light, the portion of the object being below the opening portion.

According to the above-described method, the thick mask material is provided onto the object, and the laser beam is irradiated from above the object in a state where the mask material is provided on the object. Accordingly, the hole is formed in the object, or the object is cut. Therefore, according to the above-described method, the appropriate hole is formed or the cutting is performed appropriately without adverse influences on a surface of the object, the surface which is in a vicinity of a portion to which the laser beam is irradiated.

According to another aspect of this disclosure, the mask material made of low-melting-point alloy is provided onto the object in the step of providing the mask material.

According to another aspect of this disclosure, the mask material corresponding to resin sheet is provided onto the object to be in close contact with the object in the step of providing the mask material.

According to another aspect of this disclosure, the low-melting-point alloy is melted at a temperature that is higher than a melting point of the low-melting-point alloy and the melted low-melting-point alloy is applied onto the object in the step of providing the mask material.

According to the above-described method, adverse influences to the object which are caused by high heat are reduced in a case where, for example, the object corresponds to a substrate including therein plural components.

According to another aspect of this disclosure, the laser processing method includes a step of removing the mask material with the use of water heated to a temperature that is higher than the melting point of the mask material in a state where the mask material is provided on the object.

According to the above-described method, in a case where the mask material is removed while allowing the water to run over a surface of the object, particles and/or dust generated during the processing are also removed at the same time.

According to another aspect of this disclosure, a resin sheet, opaque resin tape, or thermally foaming adhesive film configured to be removed when heated is used as the mask material.

According to the above-described method, as the mask material and the object (for example, the substrate) are in close contact with each other, loss of light energy (decrease in processing efficiency of the object) due to light scattering occurring at boundary between the mask material and the object is prevented. In addition, it is prevented that the boundary surface is damaged (it is prevented that the light enters the boundary and that the boundary surface is processed).

According to another aspect of this disclosure, irradiation power of the ultrashort-pulse laser light is higher than a processing threshold of the mask material and is higher than a processing threshold of the object.

According to the above-described method, because the irradiation power of the ultrashort-pulse laser light is higher than the processing threshold of the mask material, the laser light at foot, that is, tail, of Gaussian distribution is efficiently absorbed. The laser light at the foot of the Gaussian distribution attributes to a taper-shaped cross section.

According to another aspect of this disclosure, a laser processing apparatus is used for the laser processing method described in one of the aforementioned aspects.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view illustrating an example of a laser processing apparatus disclosed here;
Fig. 2A is a process cross-sectional view (No. 1) illustrating a laser processing method according to a first embodiment disclosed here;
Fig. 2B is a process cross-sectional view (No. 1) illustrating the laser processing method according to the first embodiment;
Fig. 2C is a process cross-sectional view (No. 1) illustrating the laser processing method according to the first embodiment;
Fig. 3A is a process cross-sectional view (No. 2) illustrating the laser processing method according to the first embodiment;
Fig. 3B is a process cross-sectional view (No. 2) illustrating the laser processing method according to the first embodiment;
Fig. 3C is a process cross-sectional view (No. 2) illustrating the laser processing method according to the first embodiment;
Fig. 4 is a graph showing a relationship between an irradiation time period of laser beam and a taper angle of an inner wall of a hole formed in a workpiece;
Fig. 5A is a view (No. 1) showing an image of the hole formed in the workpiece, which is obtained by a scanning electron microscope (SEM);
Fig. 5B is a view (No. 1) showing an image of the hole formed in the workpiece, which is obtained by SEM;
Fig. 6A is a view (No. 2) showing an image of the hole formed in the workpiece, which is obtained by SEM;
Fig. 6B is a view (No. 2) showing an image of the hole formed in the workpiece, which is obtained by SEM;
Fig. 7 is a cross-sectional view of a processed shape of a workpiece according to a reference example;
Fig. 8 is a plane view illustrating an example of a planned cutting line according to a second embodiment;
Fig. 9A is a process cross-sectional view (No. 1) illustrating a laser processing method according to the second embodiment disclosed here;
Fig. 9B is a process cross-sectional view (No. 1) illustrating the laser processing method according to the second embodiment;
Fig. 9C is a process cross-sectional view (No. 1) illustrating the laser processing method according to the second embodiment;
Fig. 10A is a process cross-sectional view (No. 2) illustrating the laser processing method according to the second embodiment;
Fig. 10B is a process cross-sectional view (No. 2) illustrating the laser processing method according to the second embodiment;
Fig. 10C is a process cross-sectional view (No. 2) illustrating the laser processing method according to the second embodiment;
Fig. 11 is a graph showing a relationship between thickness of mask material and a processed width of the workpiece;
Fig. 12 is a plan view showing a relationship between planned cutting lines and functional regions according to a third embodiment disclosed here;
Fig. 13A is a process cross-sectional view (No. 1) showing a manufacturing method of an electronic component and a manufacturing method of an electronic device using the electronic component, according to the third embodiment;
Fig. 13B is a process cross-sectional view (No. 1) showing the manufacturing method of the electronic component and the manufacturing method of the electronic device using the electronic component, according to the third embodiment;
Fig. 13C is a process cross-sectional view (No. 1) showing the manufacturing method of the electronic component and the manufacturing method of the electronic device using the electronic component, according to the third embodiment;
Fig. 14A is a process cross-sectional view (No. 2) showing the manufacturing method of the electronic component and the manufacturing method of the electronic device using the electronic component, according to the third embodiment;
Fig. 14B is a process cross-sectional view (No. 2) showing the manufacturing method of the electronic component and the manufacturing method of the electronic device using the electronic component, according to the third embodiment;
Fig. 14C is a process cross-sectional view (No. 2) showing the manufacturing method of the electronic component and the manufacturing method of the electronic device using the electronic component, according to the third embodiment;
Fig. 15A is a process cross-sectional view (No. 3) showing the manufacturing method of the electronic component and the manufacturing method of the electronic device using the electronic component, according to the third embodiment;
Fig. 15B is a process cross-sectional view (No. 3) showing the manufacturing method of the electronic component and the manufacturing method of the electronic device using the electronic component, according to the third embodiment;
Fig. 16A is a process cross-sectional view (No. 4) showing the manufacturing method of the electronic component and the manufacturing method of the electronic device using the electronic component, according to the third embodiment;
Fig. 16B is a process cross-sectional view (No. 4) showing the manufacturing method of the electronic component and the manufacturing method of the electronic device using the electronic component, according to the third embodiment; and
Fig. 17 is a process cross-sectional view (No. 5) showing the manufacturing method of the electronic component and the manufacturing method of the electronic device using the electronic component, according to the third embodiment.

### DETAILED DESCRIPTION

Embodiments disclosed here will be described with reference to drawings. This disclosure is not limited to the following embodiments and maybe appropriately changed or modified without departing from a subject matter of the disclosure. In the drawings described below, the same reference numerals designate the same or corresponding functions and description thereof may be omitted or simplified.

A laser processing method according to a first embodiment disclosed here will be described with reference to the drawings.

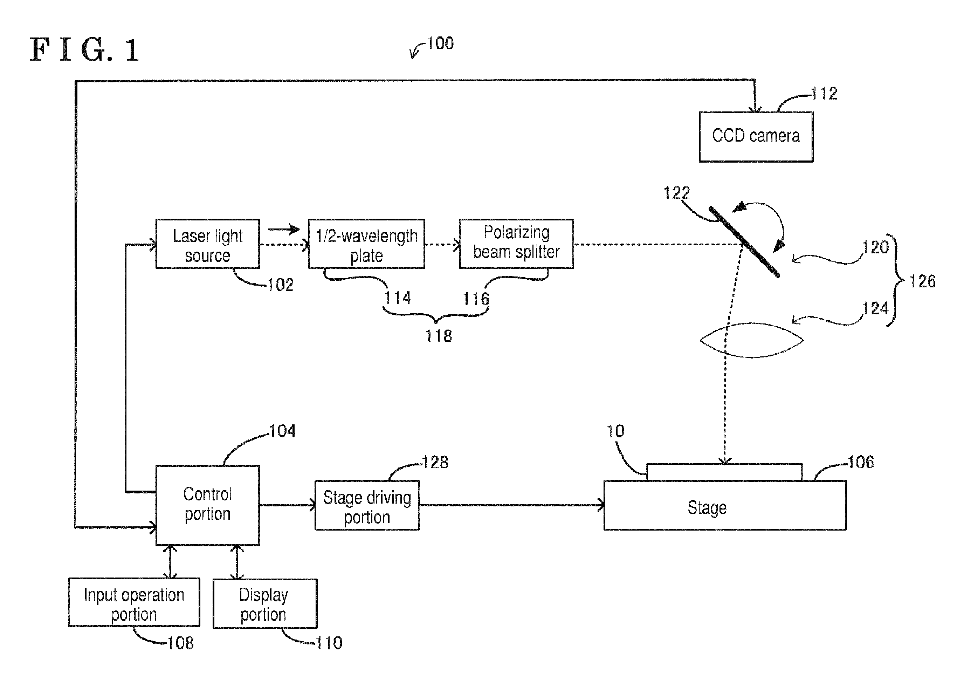

First, a laser processing apparatus used in the laser processing method of the present embodiment will be described. Fig. 1 is a schematic view illustrating an example of the laser processing apparatus. In Fig. 1, connection among components of the laser processing apparatus is drawn with solid lines and an optical path of laser light is drawn with dotted lines.

A laser processing apparatus 100 includes a laser light source 102 emitting the laser light, a control portion 104 controlling the entire laser processing apparatus, and a stage 106 on which a workpiece 10 (i.e., an object) serving as an object of processing is mounted. The workpiece 10 includes, for example, an object which is to be formed with a hole or an object which is to be cut. The laser processing apparatus 100 is provided at a manufacturing apparatus manufacturing an article (a product).

The laser processing apparatus 100 irradiates or delivers the laser light to the workpiece 10, thereby processing the workpiece 10. For example, the laser processing apparatus 100 irradiates the laser light to the workpiece 10, and thus makes or forms the hole in the workpiece 10. In addition, the laser processing apparatus 100 scans the laser light on the workpiece 10, and thus cuts the workpiece 10.

The control portion 104 includes a central processing unit (CPU) executing the processing including various calculations, controls, discriminations. In addition, the control portion 104 includes, for example, read-only memory (ROM) which stores, for example, various control programs which is executed by the CPU. In addition, the control portion 104 includes, for example, random access memory (RAM) which temporarily stores, for example, data being processed by the CPU and input data.

An input operation portion 108 is connected to the control portion 104. The input operation portion 108 is for a user to input a predetermined command and/or data. For example, a keyboard and/or various switches are used as the input operation portion 108.

A display portion 110 for performing various display is connected to the control portion 104. On the display portion 110, for example, an operation status of the laser processing apparatus 100, a status of the stage 106, images obtained by a CCD camera 112 are displayed. For example, a liquid crystal display is used as the display portion 110.

The laser light source 102 is configured to emit the laser light (laser beam). Here, for example, an ultrashort-pulse laser is used as the laser light. For example, a femtosecond laser light is used as the ultrashort-pulse laser light. Generally, the femtosecond laser light corresponds to pulse laser light of which a pulse width is femtosecond (fs: 10⁻¹⁵ second) order, that is, the pulse width of the femtosecond laser light is equal to or greater than 1 fs and is smaller than 1 ps. For example, the pulse laser beam of which the pulse width is femtosecond order is emitted from the laser light source 102. As the laser light source 102 in the present embodiment, for example, a laser oscillator of which a center wavelength is approximately 1045 nm and of which a pulse width is approximately 700 fs is used. Power of the laser light emitted from the laser light source 102 is approximately 50 mW to 20 W, for example.

Here, the explanation is made on a case where the pulse width of the laser light emitted from the laser light source 102 is approximately 700 fs, however, the pulse width of the laser light is not limited to approximately 700 fs. In addition, the pulse width of the laser light is not limited to femtosecond order and may be picosecond order. In the present disclosure, the ultrashort-pulse laser light is not limited to the laser light of which the pulse width is femtosecond and the ultrashort-pulse laser light includes the picosecond laser light of which the pulse width is equal to or smaller than several tens of picoseconds.

In addition, the center wavelength of the laser light emitted from the laser light source 102 is not limited to approximately 1045 nm and may be set appropriately.

In addition, the power of the laser light emitted from the laser light source 102 is not limited to approximately 50 mW to 20 W and may be set appropriately.

The laser light source 102 is controlled by the control portion 104. A pulse width of the laser light emitted from the laser light source 102 may be set appropriately by the user via the input operation portion 108. For example, various setting information inputted by the user is appropriately stored within a memory portion provided at the control portion 104. The control portion 104 controls the laser light source 102 so that the laser light is irradiated to the workpiece 10.

A 1/2-wavelength plate 114 controlling a polarization direction of the laser light is provided downstream of, that is, at a rear phase relative to, the laser light source 102 irradiating the laser light. A polarizing beam splitter 116 adjusting output of the laser light is provided downstream of the 1/2-wavelength plate 114. As the 1/2-wavelength plate 114 is rotated and accordingly the polarization direction of the laser light is changed, a ratio of polarization component split at the polarizing beam splitter 116 changes. By appropriately adjusting a rotational angle of the 1/2-wavelength plate 114, the power of the laser light emitted from the polarizing beam splitter 116 is adjusted appropriately. The 1/2-wavelength plate 114 and the polarizing beam splitter 116 constitute an output attenuator 118. Thus, laser intensity of the laser light emitted from the laser light source 102 is configured to be adjusted by the output attenuator 118. The laser intensity of the laser light may be appropriately set by the user via the input operation portion 108.

Here, the explanation is made on a case where the laser intensity of the laser light is adjusted with the use of the output attenuator 118 constituted by the 1/2-wavelength plate 114 and the polarizing beam splitter 116, however, a mechanism adjusting the intensity of the laser light is not limited thereto. The intensity of the laser light may be adjusted appropriately with the use of an arbitrary adjustment mechanism or adjustment device.

A galvanic scanner 120 is provided downstream of the output attenuator 118. The galvanic scanner 120 is optical equipment which can scan the laser beam at a high speed by appropriately changing an angle of a mirror. The laser light entering the galvanic scanner 120 is reflected by a mirror 122 of the galvanic scanner 120 and is configured to enter or to be introduced to an Fθ (F-Theta) lens 124. The Fθ lens 124 is a lens used for laser beam and includes a function of scanning the laser beam, the laser beam which is scanned at an equal angle by a rotational mirror, at a constant speed on an image plane. The galvanic scanner 120 and the Fθ lens 124 constitute a scanning optical system 126 performing two-dimensional scanning of the laser beam. The scanning optical system 126 is controlled by the control portion 104 appropriately.

The stage 106 is positioned below the Fθ lens 124. The workpiece 10 is configured to be mounted on the stage 106. A stage driving portion 128 for driving or actuating the stage 106 is connected to the stage 106. The control portion 104 drives the stage 106 via the stage driving portion 128. The stage 106 may be an XY-axis stage, an XYZ-axis stage or an XYZθ-axis stage.

As described above, the laser processing apparatus 100 can irradiate the laser beam to a desired portion of the workpiece 10. In addition, the laser processing apparatus 100 can scan the laser beam to the workpiece 10.

The laser processing apparatus 100 is configured to irradiate the laser beam to the workpiece 10, thereby processing the workpiece 10. An ambient atmosphere of the workpiece 10 is, for example, atmosphere (air).

The CCD camera 112 is provided above the stage 106. The image obtained by the CCD camera 112 is configured to be inputted to the control portion 104. The control portion 104 uses the image obtained by the CCD camera 112 and performs, for example, a positioning of the workpiece 10.

In the present embodiment, the explanation is made on a case where the laser light is irradiated to the desired portion of the workpiece 10 with the use of the scanning optical system 126 including the galvanic scanner 120, however, the disclosure is not limited thereto. For example, the stage 106 may be appropriately controlled with the use of a mirror and a condenser lens, so that the laser beam is irradiated to the desired portion of the workpiece 10.

Before the irradiation of the laser beam relative to the workpiece 10 is started, a position of the workpiece 10 is set at a predetermined position. The control portion 104 appropriately controls the stage 106 via the stage driving portion 128, and thereby positioning the workpiece 10 within a range in which the scanning of the laser beam can be conducted by the scanning optical system 126.

A laser beam irradiation portion of the workpiece 10 (that is, a portion to which the laser beam is irradiated) is set, for example, via the control of the scanning optical system 126. The control relative to the scanning optical system 126 is conducted by, for example, the control portion 104. The scanning optical system 126 appropriately rotates the mirror 122 of the galvanic scanner 120 and thus appropriately sets the laser beam irradiation portion. In addition, the scanning optical system 126 appropriately performs the scanning of the laser beam.

A diameter of an irradiation spot of the laser beam may be appropriately set by the user via the input operation portion 108. The diameter of the irradiation spot of the laser beam may be adjusted by, for example, moving the stage 106 upwardly and downwardly in a direction of a normal line on an upper surface of the stage 106. The diameter of the irradiation spot of the laser beam is set appropriately within a range of, for example, several µm to several tens of µm.

The diameter of the irradiation spot of the laser beam is not limited to the range of several µm to several tens of µm and may be set appropriately.

A planned portion to which the laser beam is planned to be irradiated (that is, a planned laser beam irradiation portion) is programmed into the control portion 104 in advance.

To start the irradiation of the laser beam relative to the workpiece 10, for example, the user provides an instruction to start the irradiation of the laser beam, via the input operation portion 108.

In a case where the instruction to start the irradiation of the laser beam is inputted, the control portion 104 conducts the irradiation of the laser beam as described below.

For making the hole in the workpiece 10, the control portion 104 sets the scanning optical system 126 in such a manner that the laser beam is irradiated to a predetermined portion of the workpiece 10 while the control portion 104 controls the laser light source 102 so that the laser light source 102 emits the laser beam. Accordingly, ablation processing (ablation) is performed at the portion of the workpiece 100 to which the laser beam is irradiated and the hole is formed in the predetermined portion.

For cutting the workpiece 10, the control portion 104 controls the laser light source 102 so that the laser beam is emitted repeatedly from the laser light source 102 while the control portion 104 scans the laser beam with the use of the scanning optical system 126. Accordingly, the laser beam is scanned so that a desired trajectory is drawn on the stage 106. Thus, the ablation processing of the workpiece 10 is performed at a portion at which the laser beam has been scanned, and thus the workpiece 10 is cut at the portion.

After completion of the scanning over the entire planned irradiation region of the laser beam, the control portion 104 completes the emission of the laser beam from the laser light source 102 and completes the scanning of the laser beam by the scanning optical system 126.

The irradiation of the laser beam may be completed by an instruction provided by the user via the input operation portion 108.

Next, the laser processing method according to the present embodiment will be described with reference to the drawings. Each of Figs. from 2A to 3C is a process cross-sectional view illustrating the laser processing method according to the present embodiment, that is, a cross-sectional view for explaining the laser processing method according to the present embodiment.

Here, the explanation is made on a case where a hole 16 (i.e., a hole), which is a fine hole, is formed in the workpiece 10.

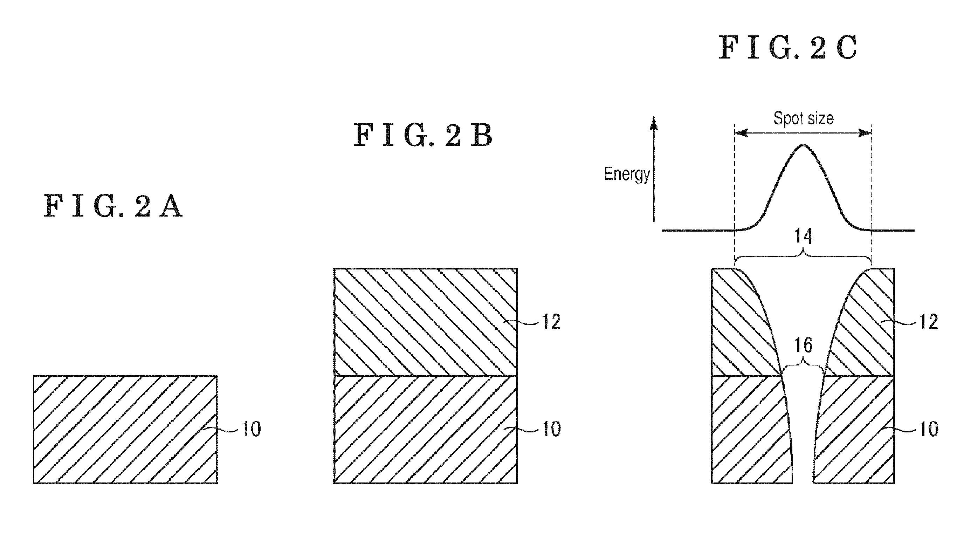

First, as illustrated in Fig. 2A, the workpiece (the object) 10 is prepared for the laser processing. Material of the workpiece 10 is, for example, metal. The metal is, for example, stainless steel. Thickness of the workpiece 10 is, for example, approximately 50 µm.

The material of the workpiece 10 is not limited to metal. For example, the material of the workpiece 10 may be semiconductor including silicon. In addition, the material of the workpiece 10 may be insulating material including glass.

Next, as illustrated in Fig. 2B, a mask material (a mask layer, a sacrificing layer) 12 is provided onto the workpiece 10. For example, low-melting-point alloy (low-melting-point metal) is used as material of the mask material 12. As the low-melting-point alloy, for example, low-melting-point alloy manufactured by Osaka Asahi Metal Mfg. Co., Ltd. (product name: U-alloy) is used. Here, for example, low-melting-point alloy of which a melting point is approximately 64°C is used as the material of the mask material 12. The low-melting-point alloy is allowed to melt at a temperature that is higher than the melting point of the low-melting-point alloy, and the melted low-melting-point alloy is applied to the workpiece 10. Thus, the mask material 12 is provided onto the workpiece 10.

A processing threshold of the mask material 12 by the laser beam is desirably equal to a processing threshold of the workpiece 10 by the laser beam or is lower than the processing threshold of the workpiece 10 by the laser beam. This is because, in a case where the processing threshold of the workpiece 10 is lower than the processing threshold of the mask material 12, the workpiece 10 is more susceptible to the ablation processing than the mask material 12, that is, the workpiece 10 is ablation-processed more easily than the mask material 12, and therefore it is difficult to make a processed shape of the workpiece 10 to follow a processed shape of the mask material 12. A processing threshold of low-melting-point metal is lower than a processing threshold of stainless steel. Consequently, in a case where the stainless steel is used as the material of the workpiece 10 and the low-melting-point metal is used as the material of the mask material 12, the processing threshold of the mask material 12 is lower than the processing threshold of the workpiece 10.

It is desirable that thickness of the mask material 12 is set large enough, that is, thick enough, for the following reason. That is, as the laser beam is irradiated to the mask material 12, an opening portion 14 including a shape or configuration of which an upper portion is widely or largely opened is formed in the mask material 12. In a case where the thickness of the mask material 12 is relatively small, that is, thin, an opening size of the opening portion 14 at a bottom surface of the mask material 12 is relatively large. The configuration of the hole 16 formed in the workpiece 10 follows the configuration of the opening portion 14 formed in the mask material 12. Thus, in a case where the thickness of the mask material 12 is relatively small, the hole 16 formed in the workpiece 10 includes a shape or configuration widely opened at an upper portion of the workpiece 10. Consequently, in a case where the thickness of the mask material 12 is relatively small, it is difficult to form the fine and appropriate hole 16 at the workpiece 10. For the above-described reason, the thickness of the mask material 12 is desirably set to be large enough. For example, the thickness of the mask material 12 is desirably equal to or greater than 10 µm. Further, the thickness of the mask material 12 is desirably equal to or larger than 20 µm, for example. Further, the thickness of the mask material 12 is desirably equal to or larger than 30 µm, for example. Here, the thickness of the mask material 12 is, for example, approximately 50 µm.

In a case where the thickness of the mask material 12 is set excessively thick, however, it takes a long period of time for the processing. Accordingly, it is desired that the thickness of the mask material 12 is set appropriately. For example, the thickness of the mask material 12 is desirably equal to or smaller than 150 µm.

The material of the mask material 12 is not limited to the low-melting-point metal and may be appropriately set. In addition, a method of providing or placing the mask material 12 onto the workpiece 10 is not limited to the application and may be appropriately specified.

Next, in a state where the mask material 12 exists on the workpiece 10, the laser light (the laser beam) is irradiated or delivered from above the workpiece 10 (refer to Figs. 2C to 3B). For example, the laser beam may be irradiated with the use of the laser processing apparatus described above with reference to Fig. 1. As the laser beam, for example, the ultrashort-pulse laser is used. Here, for example, the femtosecond laser including the pulse width of approximately 700 fs is used as the laser beam. A wave length of the laser beam is, for example, approximately 1045 nm. A spot size of the laser beam is, for example, approximately φ33 µm. Irradiation power of the laser beam is set to be higher than the processing threshold of the mask material 12 and to be higher than the processing threshold of the workpiece 10. Here, the irradiation power of the laser beam is, for example, approximately 500 mW.

The pulse width, the wave length, the spot size, the irradiation power and the like of the laser beam are not limited to the above-described values and may be appropriately set.

Fig. 2C illustrates an early stage of the laser processing. More specifically, Fig. 2C illustrates a state when, for example, 0.1 seconds have passed since the irradiation of the laser beam is started. In Fig. 2C, a view at an upper side of the paper on which Fig. 2C is drawn illustrates an energy intensity distribution of the laser light that is irradiated. In Fig. 2C, a view at a lower side of the paper on which Fig. 2C is drawn illustrates the processed shapes of the mask material 12 and the workpiece 10. At the laser beam irradiation portion, the ablation processing (the ablation) is performed relative to the mask material 12 by the laser beam, that is, the mask material 12 is ablation-processed by the laser beam, and thus the opening portion 14 penetrating the mask material 12 is formed. At a portion of the workpiece 10, the portion being below or under the opening portion 14, the ablation processing is performed by the laser beam, that is, the workpiece 10 is ablation-processed by the laser beam, and thus the hole 16 is formed. The opening size (a diameter) of the opening portion 14 penetrating the mask material 12 decreases gradually from an upper surface of the mask material 12 towards the bottom surface of the mask material 12. In other words, the opening portion 14 formed in the mask material 12 includes the shape whose upper portion is widened or is widely opened. An opening size (a diameter) of the hole 16 formed in the workpiece 10 also decreases gradually from an upper surface of the workpiece 10 towards a bottom surface of the workpiece 10. As illustrated in the view at the upper side of Fig. 2C, the energy intensity distribution of the laser light corresponds to Gaussian distribution. Because the laser light including the above-described energy intensity distribution is irradiated, the mask material 12 and the workpiece 10 are processed to include a shape or configuration reflecting an inverted shape of the Gaussian distribution, as illustrated in the view at the lower side of Fig. 2C.

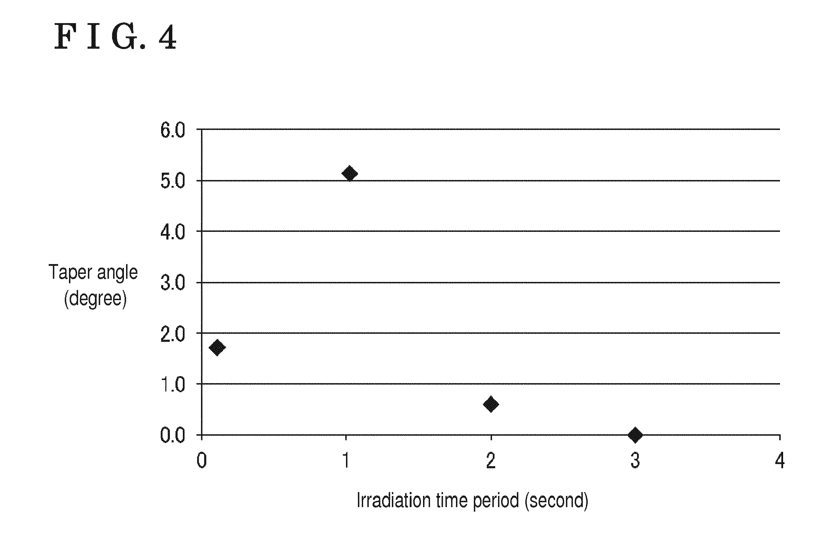

Fig. 4 is a graph showing a relationship between an irradiation time period of the laser beam and a taper angle of an inner wall of the hole formed in the workpiece. In Fig. 4, a horizontal axis indicates the irradiation time period of the laser beam and a vertical axis indicates the taper angle of the inner wall of the hole. As illustrated in Fig. 4, for example, at a stage at which 0.1 seconds have passed since the start of irradiation of the laser beam, the taper angle of the inner wall of the hole 16 is, for example, approximately 1.8 degrees.

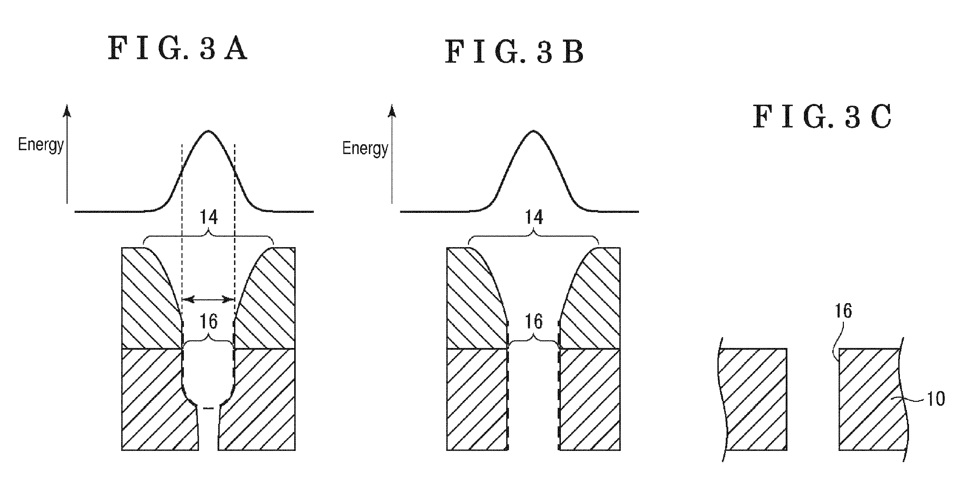

The laser light positioned at foot, that is, tail, of the Gaussian distribution is relatively low in the energy intensity. Accordingly, the ablation of the mask material 12 is not easily progressed by the laser light positioned at the foot, that is, tail, of the Gaussian distribution. The laser light positioned at the foot of the Gaussian distribution is absorbed by the mask material 12. On the other hand, a portion of the laser beam which is close to a center is extremely high in the energy intensity. Thus, the ablation of the mask material 12 and the workpiece 10 is conducted and progressed by the portion of the laser beam which is close to the center, and accordingly the opening size of the opening portion 14 and the diameter of the hole 16 gradually increase. Accordingly, when a certain time period has passed since the laser processing is started, the process shape illustrated in Fig. 3A is obtained. Fig. 3A illustrates a state when the certain time period has passed since the laser processing is started. More specifically, Fig. 3A illustrates the state when, for example, 1 second has passed since the irradiation of the laser beam is started. As illustrated in Fig. 4, for example, at the stage at which 1 second has passed since the start of irradiation of the laser beam, the taper angle of the inner wall of the hole 16 is, for example, approximately 5.2 degrees.

As described above, the energy intensity of the laser light positioned at the foot of the Gaussian distribution is relatively low. Accordingly, the ablation of the mask material 12 is not easily progressed by the laser light positioned at the foot of the Gaussian distribution. On the other hand, the energy intensity of the portion of the laser beam which is close to the center is extremely high. Thus, in a case where the irradiation of the laser beam is further continued, the ablation processing of the mask material 12 and the workpiece 10 is further conducted and progressed by the portion of the laser beam which is close to the center of the laser beam, and as a result, the opening size of the opening portion 14 and the diameter of the hole 16 further increase. Then, as illustrated in Fig. 3B, the taper angle of the inner wall of the hole 16 formed in the workpiece 10 becomes extremely small. Fig. 3B illustrates a state when a sufficient time period has passed since the start of the laser processing. More specifically, Fig. 3B illustrates the state when, for example, 2 seconds or longer have passed since the irradiation of the laser beam is started. As illustrated in Fig. 4, for example, at the stage at which 2 seconds have passed since the start of irradiation of the laser beam, the taper angle of the inner wall of the hole 16 is, for example, approximately 0.5 degrees. In addition, as illustrated in Fig. 4, for example, at a stage at which 3 seconds have passed since the start of irradiation of the laser beam, the taper angle of the inner wall of the hole 16 is, for example, approximately 0 degrees. As described above, the fine and appropriate hole (a through hole) 16 is formed in the workpiece 10.

Next, the mask material 12 remaining on the workpiece 10 is removed or eliminated. The low-melting-point metal can be removed with the use of fluid that is heated to a temperature higher than the melting point of the low-melting-point metal. Accordingly, here, the mask material 12 is removed with the use of, for example, water heated to a temperature that is higher than the melting point of the mask material 12. As described above, the workpiece 10 at which the fine and appropriate hole 16 is formed is obtained (refer to Fig. 3C).

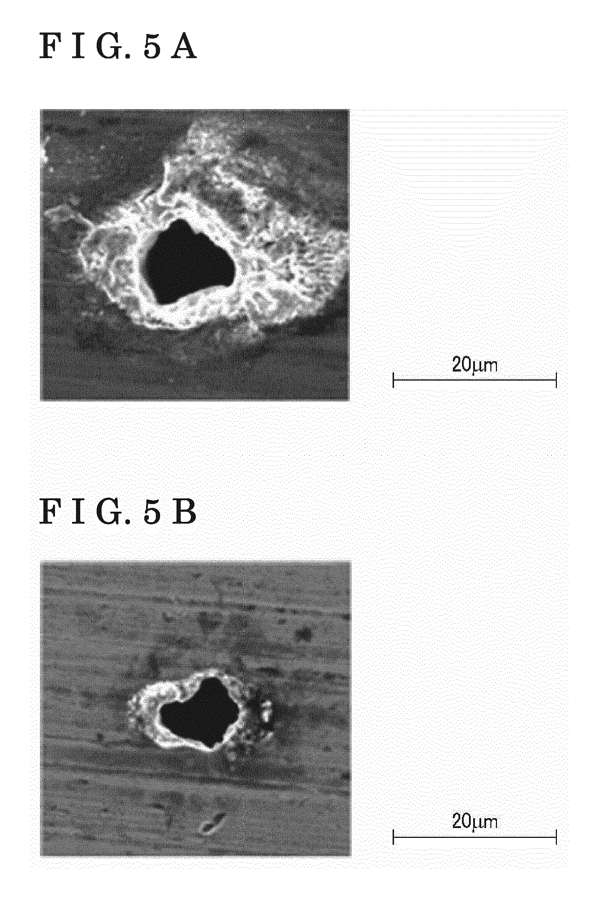

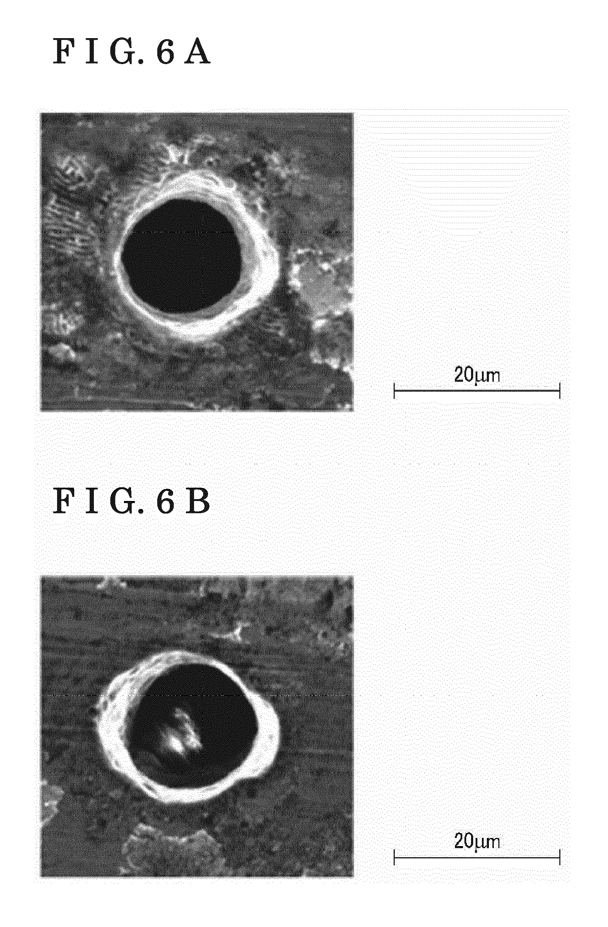

Next, evaluation results of the laser processing method according to the present embodiment will be described. Each of Figs. 5A, 5B, 6A, and 6B is a view showing an image of the hole formed in the workpiece, which is obtained by a scanning electron microscope (SEM). Each of Figs. 5A and 5B illustrates the SEM image of the hole in a state where the laser beam is irradiated for 0.1 seconds. Fig. 5A illustrates the SEM image of the upper surface-side of the workpiece 10 and Fig. 5B illustrates the SEM image of the bottom surface-side of the workpiece 10. Each of Figs. 6A and 6B illustrates the SEM image of the hole in a state where the laser beam is irradiated for 3 seconds. Fig. 6A illustrates the SEM image of the upper surface-side of the workpiece 10 and Fig. 6B illustrates the SEM image of the bottom surface-side of the workpiece 10.

As can be seen in Figs. 5A and 5B, the diameter of the hole 16 is relatively small at the early stage of the laser processing. In addition, as can be seen in Figs. 5A and 5B, the diameter of the hole 16 at the bottom surface-side of the workpiece 10 is extremely smaller than the diameter of the hole 16 at the upper surface-side of the workpiece 10 at the early stage of the laser processing. In addition, as can be seen in Figs. 5A and 5B, a cross-sectional shape of the hole 16 is not a shape that is close to a perfect circle at the early stage of the laser processing.

On the other hand, as can be seen from Figs. 6A and 6B, the hole 16 is formed to have a desired diameter at a stage where the laser processing is performed sufficiently. In addition, as can be seen from Figs. 6A and 6B, the diameter of the hole 16 at the bottom surface-side of the work piece 10 and the diameter of the hole 16 at the upper surface-side of the work piece 10 is substantially equivalent to each other at the stage at which the sufficient laser processing is performed. In addition, as can be seen in Figs. 6A and 6B, the cross-sectional shape of the hole 16 corresponds to the shape that is close to the perfect circle at the stage at which the sufficient laser processing is performed.

As described above, according to the present embodiment, the fine and appropriate hole 16 is formed.

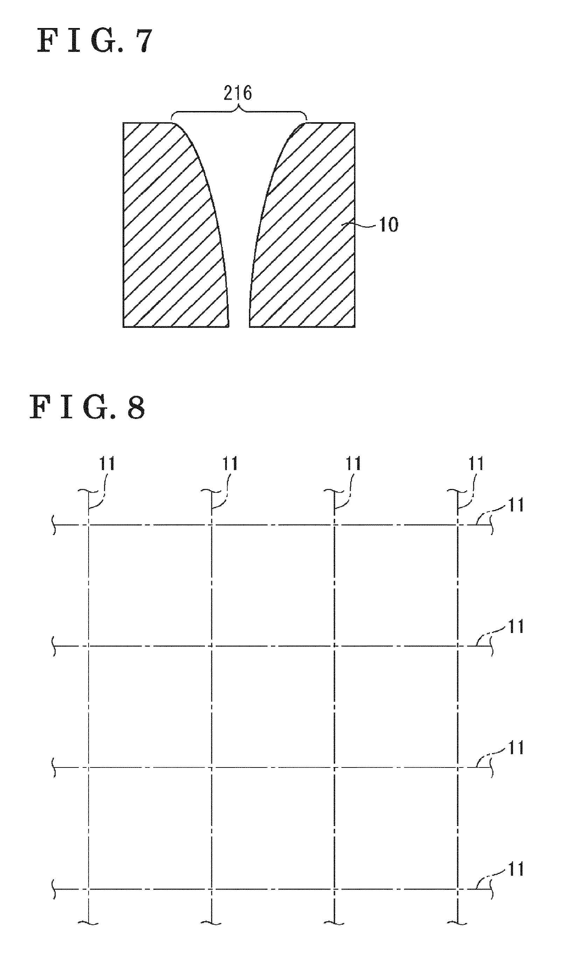

Fig. 7 is a cross-sectional view of a processed shape of a workpiece according to a reference example. Fig. 7 illustrates the processed shape of a hole 216 in a case where the laser beam is irradiated to the workpiece 10 without providing the mask material 12 onto the workpiece 10, and then the hole 216 is formed in the workpiece 10. As can be seen in Fig. 7, in a case where the laser beam is irradiated to the workpiece 10 without providing the mask material 12 onto the workpiece 10, the workpiece 10 is processed to include a shape or configuration reflecting the inverted shape of the Gaussian distribution. Accordingly, in a case where the laser beam is irradiated without providing the mask material 12, the hole 216 formed in the workpiece 10 includes the processed shape of which an upper portion is widely opened. In addition, a surface of the workpiece 10 at surroundings of the hole 216 may be adversely influenced. In addition, a crack and/or chipping may be generated at the workpiece 10 in a vicinity of the portion to which the laser beam is irradiated. In addition, debris may adhere to the surface of the workpiece 10 in a vicinity of the portion to which the laser beam is irradiated.

To the contrary, according to the present embodiment, because the laser beam is irradiated in a state where the mask material 12 is provided on the workpiece 10, the fine and appropriate hole 16 is formed in the workpiece 10. Further, according to the present embodiment, because the laser beam is irradiated in a state where the mask material 12 is provided on the workpiece 10, the surface of the workpiece 10 at the surroundings of the hole 16 is prevented from being adversely influenced. Further, according to the present embodiment, because the laser beam is irradiated in a state where the mask material 12 is provided on the workpiece 10, the crack and/or chipping are prevented from being generated at the workpiece 10 in a vicinity of the hole 16. Further, according to the present embodiment, because the laser beam is irradiated in a state where the mask material 12 is provided on the workpiece 10, also the debris is prevented from adhering to the surface of the workpiece 10 in a vicinity of the hole 16.

A laser processing method according to a second embodiment disclosed here will be described with reference to the drawings. In the second embodiment, the same reference numerals designate components that are same as the laser processing method according to the first embodiment illustrated in Figs. 1 to 7, and description thereof may be omitted or simplified.

The laser processing method of the present embodiment is for cutting a workpiece 10a.

Fig. 8 is a plane view illustrating an example of a planned cutting line disclosed here. According to the laser processing method of the present embodiment, the laser beam is scanned along a planned cutting line 11, for example, plural planned cutting lines 11, and thus the workpiece 10a is cut.

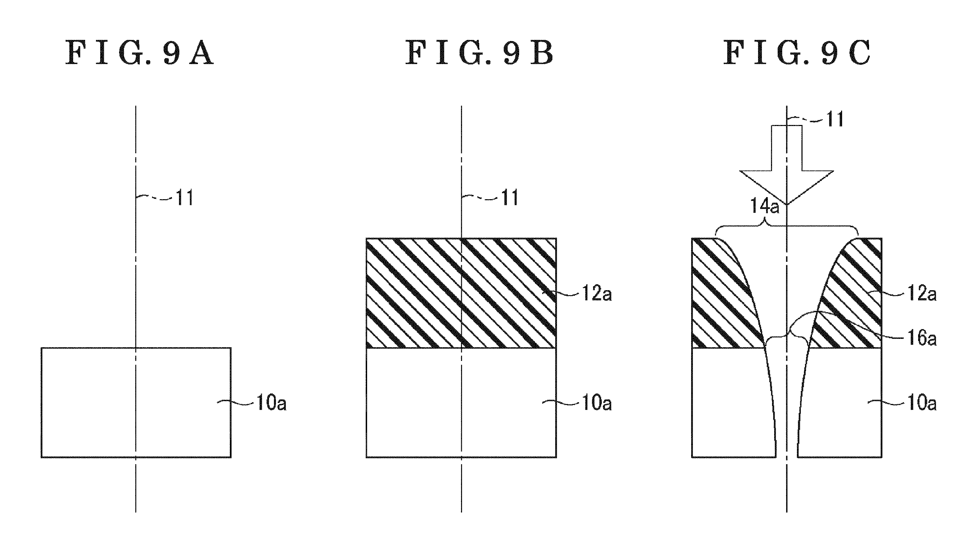

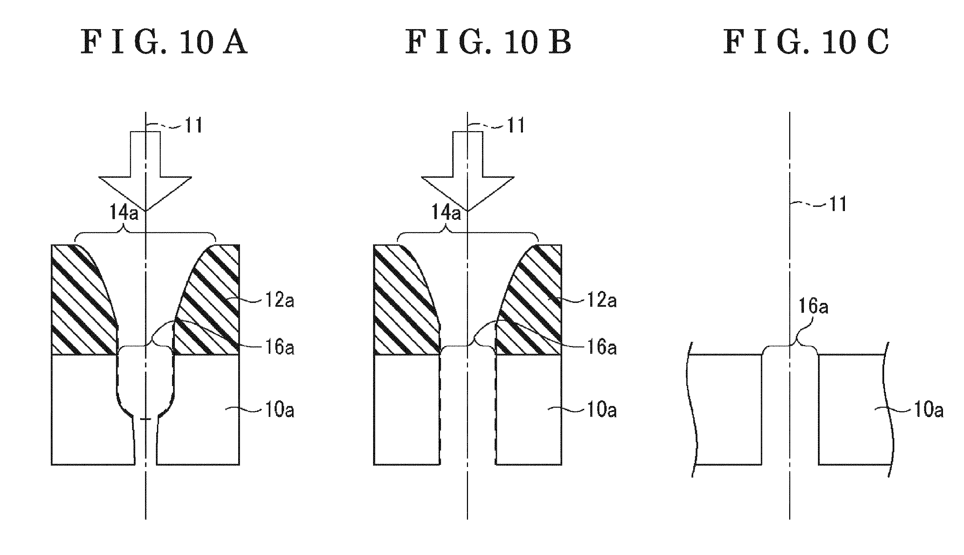

Each of Fig. 9A, 9B, 9C, 10A, 10B, and 10C is a process cross-sectional view illustrating the laser processing method according to the present embodiment, that is, a cross-sectional view for explaining the laser processing method according to the present embodiment.

First, as illustrated in Fig. 9A, the workpiece 10a (i.e., the object) is prepared for the laser processing. Material of the workpiece 10a is, for example, semiconductor. More specifically, the material of the workpiece 10a is, for example, silicon. Here, the workpiece 10a is a silicon substrate, for example. Thickness of the workpiece 10a is, for example, approximately 500 µm.

The material of the workpiece 10a is not limited to the semiconductor. For example, the material of the workpiece 10a may be insulating material including glass. In addition, the material of the workpiece 10a may be, for example, metal. In addition, the thickness of the workpiece 10a is not limited to the above-stated thickness and may be appropriately set.

Next, as illustrated in Fig. 9B, a mask material (the mask layer, the sacrificing layer) 12a is provided onto the workpiece 10a. For example, resin sheet (resin film) is used as the mask material 12a. The mask material 12a made from the resin sheet is provided onto the workpiece 10a to be in close contact with the workpiece 10a. Here, resin tape, which corresponds to the resin sheet (resin film) of which one surface is provided with an adhesion layer, is used as the mask material 12a. As the resin tape, for example, Mylar (registered trademark) tape (product name: Black Metalized Mylar (registered trademark) Tape, model number: S-15881 BL) manufactured by U-LINE is used. The S-15881BL is an opaque, black-colored resin tape. A laser light transmission rate of the S-15881 BL is 0%. Thickness of the S-15881 BL is 50 µm. As described above, the mask material 12a is adhered onto the workpiece 10a.

A processing threshold of the mask material 12a by the laser beam is desirably equal to a processing threshold of the workpiece 10a by the laser beam or is lower than the processing threshold of the workpiece 10a by the laser beam. This is because, in a case where the processing threshold of the workpiece 10a is lower than the processing threshold of the mask material 12a, the workpiece 10a is susceptible to the ablation processing more easily than the mask material 12a, and therefore it is difficult to make a processed shape of the workpiece 10a to follow a processed shape of the mask material 12a. A processing threshold of Mylar (registered trademark) is lower than a processing threshold of silicon. Consequently, in a case where the silicon is used as the material of the workpiece 10a and Mylar (registered trademark) is used as the material of the mask material 12a, the processing threshold of the mask material 12a is lower than the processing threshold of the workpiece 10a.

It is desirable that thickness of the mask material 12a is set large, that is, thick, enough for the following reason. That is, as the laser beam is irradiated, an opening portion 14a including a shape or configuration of which an upper portion is widely or largely opened is formed in the mask material 12a. In a case where the thickness of the mask material 12a is relatively small, that is thin, an opening size of the opening portion 14a at a bottom surface of the mask material 12a is relatively large. A configuration of an opening 16a formed in the workpiece 10a follows the configuration of the opening portion 14a formed in the mask material 12a. Thus, in a case where the thickness of the mask material 12a is relatively small, the opening 16a (i.e., the hole) formed in the workpiece 10a includes the configuration widely or largely opened at an upper portion of the workpiece 10a. Consequently, in a case where the thickness of the mask material 12a is relatively small, it is difficult to cut the workpiece 10a with a processed width that is sufficiently narrow. For the above-described reason, the thickness of the mask material 12a is desirably set to be large enough. For example, the thickness of the mask material 12a is desirably equal to or larger than 10 µm. Further, the thickness of the mask material 12a is desirably equal to or larger than 20 µm, for example. Further, the thickness of the mask material 12a is desirably equal to or larger than 30 µm, for example. Here, the thickness of the mask material 12a is, for example, approximately 50 µm.

In a case where the thickness of the mask material 12a is set excessively thick, however, it takes a long period of time for the processing. Accordingly, it is desired that the thickness of the mask material 12a is set appropriately. For example, the thickness of the mask material 12a is desirably equal to or smaller than 150 µm.

The material of the mask material 12a is not limited to the resin and may be appropriately set. In addition, a method of providing or placing the mask material 12a onto the workpiece 10a is not limited to the adhesion and may be appropriately specified.

Next, in a state where the mask material 12a exists on the workpiece 10a, the laser light (the laser beam) is irradiated or delivered from above the workpiece 10a (refer to Figs. 9C to 10B). For example, the laser beam may be irradiated with the use of the laser processing apparatus described above with reference to Fig. 1. As the laser beam, for example, the ultrashort-pulse laser is used. Here, for example, the femtosecond laser including the pulse width of approximately 700 fs is used as the laser beam. The wave length of the laser beam is, for example, approximately 1045 nm. The spot size of the laser beam is, for example, approximately φ40 µm. The irradiation power of the laser beam is set to be higher than the processing threshold of the mask material 12a and to be higher than the processing threshold of the workpiece 10a. Here, the irradiation power of the laser beam is, for example, approximately 10 W.

The pulse width, the wave length, the spot size, the irradiation power and the like of the laser beam are not limited to the above-described values and may be appropriately set.

Fig. 9C illustrates the early stage of the laser processing. More specifically, Fig. 9C illustrates the state when, for example, 0.1 seconds have passed since the irradiation of the laser beam is started. At the laser beam irradiation portion, the ablation processing is performed to the mask material 12a by the laser beam, and the opening portion 14a penetrating the mask material 12a is formed at the mask material 12a. At a portion of the workpiece 10a, the portion which is positioned below the opening portion 14a, the ablation processing is performed by the laser beam to the workpiece 10a, and thus the opening 16a is formed in the workpiece 10a. An opening size (a processing size) of the opening portion 14a penetrating the mask material 12a decreases gradually from an upper surface of the mask material 12a towards the bottom surface of the mask material 12a. In other words, the opening portion 14a includes the shape or configuration of which an upper portion is widely opened. An opening size (a processing size) of the opening 16a, which is formed in the workpiece 10a, also decreases gradually from an upper surface of the workpiece 10a towards a bottom surface of the workpiece 10a. The energy intensity distribution of the laser light corresponds to Gaussian distribution. Because the laser light including the above-described energy intensity distribution is irradiated, the mask material 12a and the workpiece 10a are processed to include the shape or configuration reflecting the inverted shape of the Gaussian distribution.

The laser light positioned at the foot or tail of the Gaussian distribution is relatively low in the energy intensity. Accordingly, the ablation of the mask material 12a is not easily progressed by the laser light positioned at the foot of the Gaussian distribution. The laser light positioned at the foot of the Gaussian distribution is absorbed by the mask material 12a. On the other hand, the portion of the laser beam which is close to the center is extremely high in the energy intensity. Thus, due to the portion of the laser beam which is close to the center, the ablation of the mask material 12a and the workpiece 10a proceeds, and accordingly the opening sizes of the opening portion 14a and the opening 16a gradually increase. Accordingly, when a certain time period has passed since the laser processing is started, a process shape illustrated in Fig. 10A is obtained. Fig. 10A illustrates a state when the certain time period has passed since the irradiation of the laser beam is started. More specifically, Fig. 10A illustrates the state when, for example, 1 second has passed since the irradiation of the laser beam is started.

As described above, the energy intensity of the laser light positioned at the foot of the Gaussian distribution is relatively low. Accordingly, the ablation of the mask material 12a is not easily progressed by the laser light positioned at the foot of the Gaussian distribution. On the other hand, the energy intensity of the portion of the laser beam which is close to the center is extremely high. Thus, in a case where the irradiation of the laser beam is further continued, the ablation processing of the mask material 12a and the workpiece 10a is further conducted and progressed by the portion of the laser beam which is close to the center, and as a result, the opening sizes of the opening portion 14a and the opening 16a are gradually increased. Fig. 10B illustrates a state when a sufficient time period has passed since the start of the laser processing. More specifically, Fig. 10B illustrates the state when, for example, 2 seconds or longer have passed since the irradiation of the laser beam is started. In the present embodiment, a taper angle of an inner wall of the opening 16a formed in the workpiece 10a is extremely small. Because the opening 16a does not include the processed shape widely opened at the upper portion thereof, the opening size (the processed width) of the opening 16a formed in the work piece 10a is small enough. The opening size (the processed width) of the opening 16a formed in the work piece 10a is, for example, approximately 15 µm.

The laser processing, which is described above with reference to Figs. 9C to 10B, is repetitively performed while the laser beam irradiation portion is moved along the planned cutting lines 11 (refer to Fig. 8), and accordingly the workpiece 10a is cut along the planned cutting lines 11. That is, by scanning the laser beam along the planned cutting lines 11, the workpiece 10a is cut.

After completion of the cutting of the workpiece 10a, the mask material 12a remaining on the workpiece 10a is removed. For example, the mask material 12a is removed from or peeled off the workpiece 10a, and thus the mask material 12a is eliminated. As described above, the workpiece 10a, which is cut with the extremely narrow processed width, is obtained (refer to Fig. 10C).

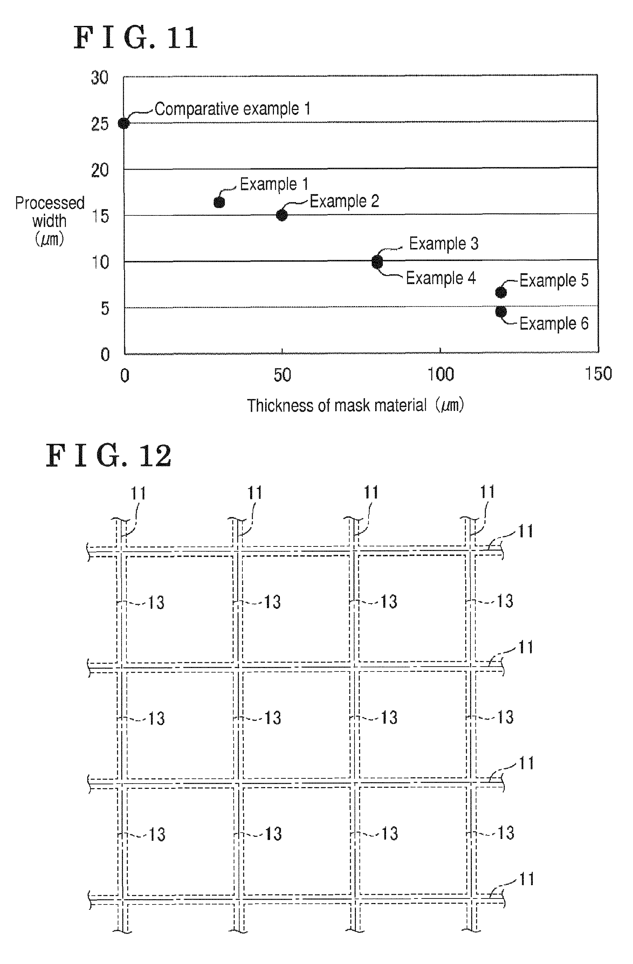

Next, evaluation results of the laser processing method of the present embodiment will be described. Fig. 11 is a graph showing a relationship between the thickness of the mask material and the processed width of the workpiece. In Fig. 11, a horizontal axis indicates the thickness of the mask material 12a and a vertical axis indicates the processed width at the cut portion. In a comparative example 1, the laser beam is irradiated without the mask material 12a being provided onto the workpiece 10a, and thus the workpiece 10a is cut. In each of examples 1 to 6, the laser beam is irradiated in a state where the mask material 12a is provided onto the workpiece 10a, and the workpiece 10a is cut.

In the example 1, thermally foaming or thermally expanding adhesive film which is a heat-peelable type, that is, which can be removed, detached or peeled off when heated (SOMATAC (registered trademark) TE Series) (model number: PS-902TE) manufactured by SOMAR Corporation is used as the mask material 12a. The PS-902TE is thermally foaming adhesive film which is translucent or semitransparent. A laser light transmission rate of the PS-902TE is 59%. Thickness of the PS-902TE is 30 µm.

In the example 2, as the mask material 12a, Mylar (registered trademark) tape (product name: Black Metalized Mylar (registered trademark) Tape, model number: S-15881BL) manufactured by U-LINE is used. The S-15881 BL is the tape that is black-colored and opaque. The laser light transmission rate of the S-15881 BL is 0%. The thickness of the S-15881 BL is 50 µm.

In the example 3, as the mask material 12a, a dicing tape (model number: Hu-859ABR) manufactured by Hugle Electronics Inc. is used. The Hu-859ABR is a blue-colored tape which is translucent or semitransparent. A laser light transmission rate of the Hu-859ABR is 94%. Thickness of the Hu-859ABR is 80 µm.

In the example 4, as the mask material 12a, a dicing tape of a non-UV type (product name: G series) manufactured by Lintec Corporation is used. The G series is a black-colored tape which is translucent or semitransparent. A laser light transmission rate of the G-series is 43%. Thickness of the G series is 80 µm.

In the example 5, as the mask material 12a, thermally foaming or thermally expanding adhesive film which is a heat-peelable type, that is, which can be removed, detached or peeled off when heated (SOMATAC (registered trademark) TE Series) (model number: PS-2011TE) manufactured by SOMAR Corporation is used. The PS-2011TE is thermally foaming adhesive film which is translucent or semitransparent. A laser light transmission rate of the PS-2011TE is 36%. Thickness of the PS-2011TE is 120 µm.

In the example 6, as the mask material 12a, thermally foaming or thermally expanding adhesive film which is a heat-peelable type, that is, which can be removed, detached or or peeled off when heated (SOMATAC (registered trademark) TE Series) (model number: PS-2021TE) manufactured by SOMAR Corporation is used. The PS-2021TE is thermally foaming adhesive film which is pale pink, and translucent or semitransparent. A laser light transmission rate of the PS-2021TE is 63%. Thickness of the PS-2021TE is 120 µm.

As can be seen in Fig. 11, the processed width is approximately 25 µm in the comparative example 1, which is relatively wide.

On the other hand, as can be seen in Fig. 11, in the examples 1 to 6, the processed width is reduced to 16 µm or smaller.

Thus, according to the present embodiment, the workpiece 10a can be cut with the extremely small processed width.

In addition, as can be seen in Fig. 11, as the thickness of the mask material 12a increases, the processed width at the cut portion of the workpiece 10a decreases.

In addition, the processed width at the cut portion of the workpiece 10a is almost independent of the color and/or the transmission rate of the mask material 12a.

As described above, the workpiece 10a may be cut. According to the present embodiment, because the laser beam is irradiated in a state where the mask material 12a is provided onto the workpiece 10a, the workpiece 10a can be cut with the extremely narrow processed width. Further, according to the present embodiment, the laser beam is irradiated in a state where the mask material 12a is provided onto the workpiece 10a, and thus the surface of the workpiece 10a in a vicinity of the cut portion may be prevented from having the adverse influences. In addition, according to the present embodiment, the laser beam is irradiated in a state where the mask material 12a is provided onto the workpiece 10a, and thus the crack and/or chipping are prevented from occurring at the cut portion of the workpiece 10a. In addition, according to the present embodiment, the laser beam is irradiated in a state where the mask material 12a is provided onto the workpiece 10a, and thus the debris is prevented from adhering to the surface of the workpiece 10a at the surroundings of the cut portion.

A laser processing method, a manufacturing method of an electronic component, and a manufacturing method of an electronic device using the electronic component, according to a third embodiment disclosed here will be described with reference to the drawings. In the third embodiment, the same reference numerals designate components that are same as, for example, the laser processing methods according to the first and second embodiments which are illustrated in Figs. 1 to 11, and description thereof may be omitted or simplified.

In the present embodiment, the explanation is made on a case where an interposer is manufactured, however, the present disclosure is not limited thereto and is generally applicable to cases where various electronic components are manufactured.

Fig. 12 is a plan view showing a relationship between the planned cutting lines and functional regions.

The interposer according to the present embodiment is manufactured in a manner that various components of interposers 15 are formed in plural functional regions 13 within a substrate 10a, and thereafter the substrate 10a is cut along the planned cutting lines 11 into individual pieces or divided pieces.

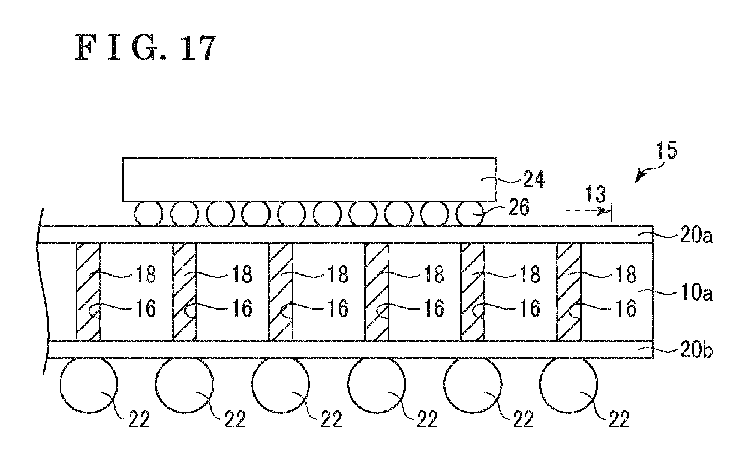

Each of the planned cutting lines 11 is positioned between the functional regions 13 that are arranged side by side with each other. After the substrate 10a is cut into the individual pieces (refer to Fig. 17), the functional region 13 corresponds to a region of each substrate 10a except a peripheral portion of the substrate 10a. The functional region 13 corresponds to the region in which the various components constituting the interposer are formed. Within the functional region 13, the various components of the interposer 15, including a via 18, for example, vias 18, (refer to Fig. 17) and/or multilayer wiring structures 20a and 20b (refer to Fig. 17), are formed.

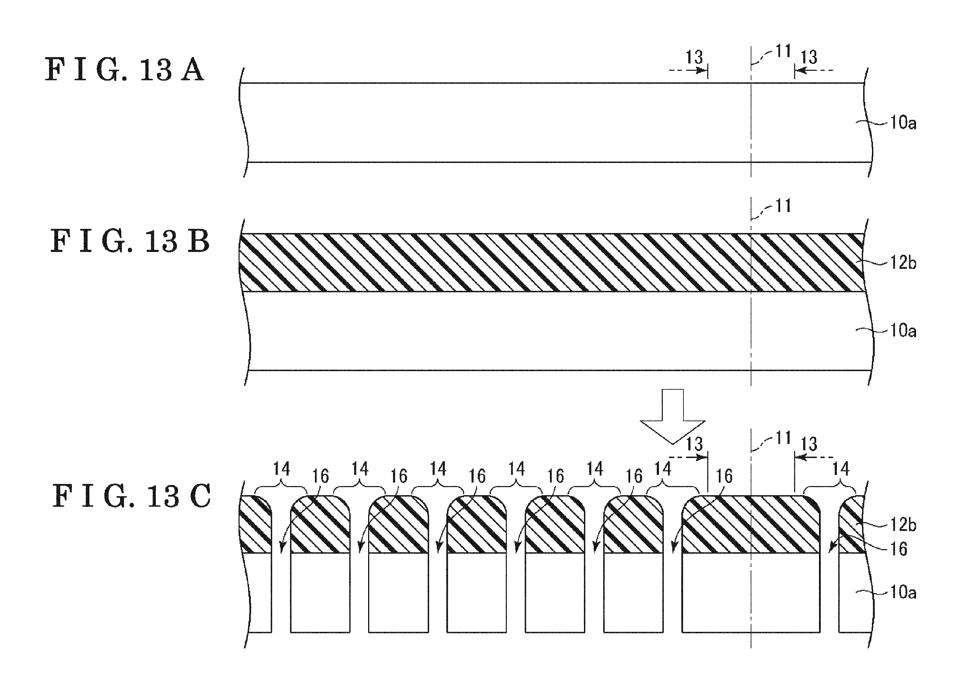

Each of Figs. 13A to 17 is a process cross-sectional view showing the manufacturing method of the electronic component and the manufacturing method of the electronic device using the electronic component, according to the present embodiment.

First, as illustrated in Fig. 13A, the substrate 10a serving as the workpiece is prepared. The substrate 10a is, for example, silicon substrate. Thickness of the silicon substrate 10a is, for example, approximately 500 µm.

The substrate 10a is not limited to the silicon substrate. For example, glass substrate may be used as the substrate 10a. In addition, the thickness of the substrate 10a is not limited to the above-described thickness and may be set appropriately.

Next, as illustrated in Fig. 13B, a mask material (the mask layer, the sacrificing layer) 12b is provided onto the substrate 10a. For example, a resin sheet (resin film) is used as the mask material 12b. The mask material 12b made from the resin sheet is provided onto the substrate 10a to be in close contact with the substrate 10a. Here, resin tape, which corresponds to the resin sheet (resin film) of which one surface is provided with an adhesion layer, is used as the mask material 12b. As the resin tape, for example, Mylar (registered trademark) tape (product name: Black Metalized Mylar (registered trademark) Tape, model number: S-15881 BL) manufactured by U-LINE is used. Thickness of the mask material 12b is, for example, approximately 50 µm. As described above, the mask material 12b is provided onto the substrate 10a.

A processing threshold of the mask material 12b by the laser beam is desirably equal to a processing threshold of the substrate 10a by the laser beam or is lower than the processing threshold of the substrate 10a by the laser beam. This is because, in a case where the processing threshold of the substrate 10a is lower than the processing threshold of the mask material 12b, the substrate 10a is susceptible to the ablation processing more easily than the mask material 12b, and therefore it is difficult to make a processed shape of the substrate 10a to follow a processed shape of the mask material 12b. As described above, the processing threshold of Mylar (registered trademark) is lower than the processing threshold of silicon. Consequently, in a case where the silicon is used as the material of the substrate 10a and Mylar (registered trademark) is used as the material of the mask material 12b, the processing threshold of the mask material 12b is lower than the processing threshold of the substrate 10a.

It is desirable that the thickness of the mask material 12b is set large, that is, thick, enough for the following reason. That is, as the laser beam is irradiated to the mask material 12b, the opening portion 14 including the shape or configuration of which the upper portion is widely opened is formed in the mask material 12b. In a case where the thickness of the mask material 12b is relatively small, that is, thin, the opening size of the opening portion 14 at a bottom surface of the mask material 12b is relatively large. The configuration of the opening 16 formed in the workpiece 10a follows the configuration of the opening portion 14 formed in the mask material 12b. Thus, in a case where the thickness of the mask material 12b is relatively small, the hole 16 formed in the workpiece 10a includes a configuration widely opened at an upper portion of the workpiece 10a. Consequently, in a case where the thickness of the mask material 12b is relatively small, it is difficult to form the fine and appropriate hole 16 in the workpiece 10a. For the above-described reason, the thickness of the mask material 12b is desirably set to be large enough. For example, the thickness of the mask material 12b is desirably equal to or larger than 10 µm. Further, the thickness of the mask material 12b is desirably equal to or larger than 20 µm, for example. Further, the thickness of the mask material 12b is desirably equal to or larger than 30 µm, for example. Here, the thickness of the mask material 12b is, for example, approximately 50 µm.

In a case where the thickness of the mask material 12b is set excessively thick, however, it takes a long period of time for the processing. Accordingly, it is desired that the thickness of the mask material 12b is set appropriately. For example, the thickness of the mask material 12b is desirably equal to or smaller than 150 µm.

The material of the mask material 12b is not limited to the resin and may be appropriately specified. In addition, the method of providing or placing the mask material 12b onto the substrate 10a is not limited to the adhesion and may be appropriately specified.

Next, in a state where the mask material 12b exists on the substrate 10a, the laser light (the laser beam) is irradiated or delivered from above the substrate 10a (refer to Fig. 13C). For example, the laser beam may be irradiated with the use of the laser processing apparatus described above with reference to Fig. 1. As the laser beam, for example, the ultrashort-pulse laser is used. Here, for example, the femtosecond laser including the pulse width of approximately 700 fs is used as the laser beam. The wave length of the laser beam is, for example, approximately 1045 nm. The spot size of the laser beam is, for example, approximately φ40 µm. The irradiation power of the laser beam is set to be higher than the processing threshold of the mask material 12b and to be higher than the processing threshold of the workpiece 10a. Here, the irradiation power of the laser beam is, for example, approximately 10 W. Accordingly, the appropriate hole (the through hole) 16 having an inner wall whose taper angle is extremely small is formed in the substrate 10a. In the present embodiment, the hole 16 is formed at plural positions of the substrate 10a.

The pulse width, the wave length, the spot size, the irradiation power and the like of the laser beam are not limited to the above-described values and may be appropriately set.

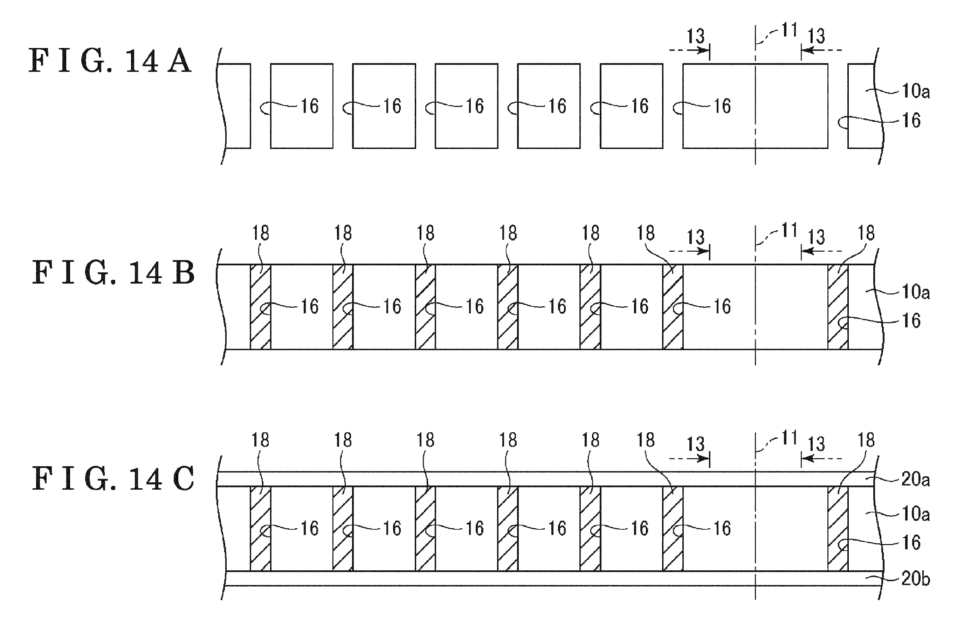

Next, the mask material 12b remaining on the substrate 10a is removed or eliminated. For example, the mask material 12b can be removed from the substrate 10a by being detached from or being peeled off the substrate 10a. As described above, the workpiece 10a at which the appropriate hole 16 is formed is obtained (refer to Fig. 14A).

Next, insulating film constituted by silicon oxide film is formed on a surface of the substrate 10a in, for example, a thermal oxidation method. Accordingly, the inner wall of the hole 16 formed in the substrate 10a is covered with the insulating film. The insulating film is formed for preventing the vias 18, which will be described later, from being short-circuited to each other via the substrate 10a.

Next, as illustrated in Fig. 14B, the via (conductor) 18 is buried or embedded into the through hole 16. For example, copper (Cu) is used as material of the via 18. The via 18 can be buried in the hole 16 with the use of, for example, an electroless plating method and a electroplating method.

Next, as illustrated in Fig. 14C, the multilayer wiring structures 20a and 20b are formed at an upper surface-side and a bottom surface-side of the substrate 10a, respectively. Each of the multilayer wiring structures 20a and 20b is formed of wiring layers that are stacked each other via an interlayer insulating or dielectric layer. For example, interlayer insulating film may be used as the interlayer insulating layer. As the interlayer insulating layer, for example, ABF (Ajinomoto Build-up Film) manufactured by Ajinomoto Fine-Techno Co., Ltd. The wiring layer can be formed with the use of, for example, the electroless plating method and the electroplating method.

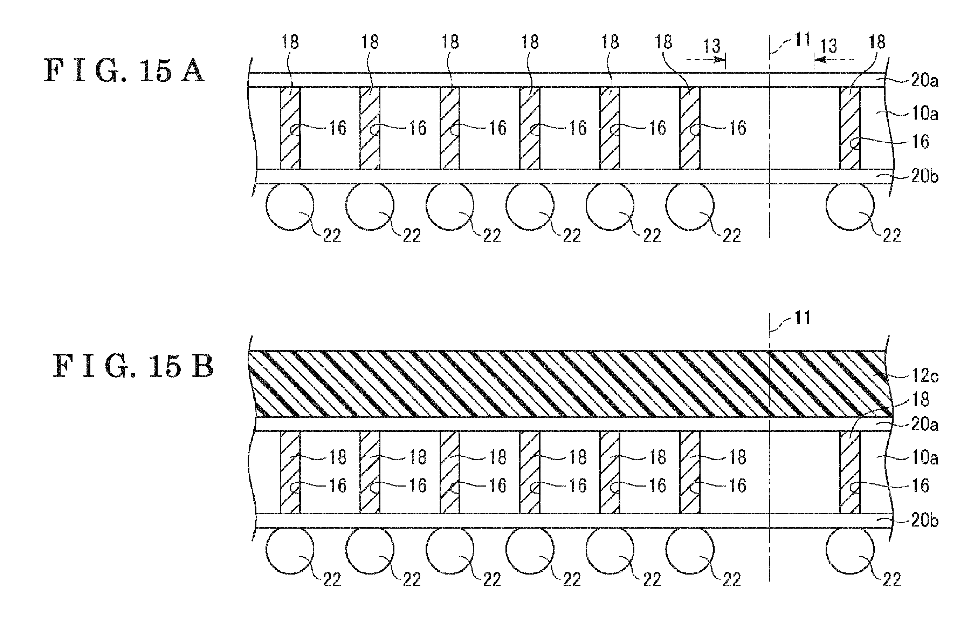

Next, as illustrated in Fig. 15A, a solder bump 22 is formed, for example, at a bottom surface-side of the multilayer wiring structure (a build-up layer) 20b. The solder bump 22 is connected to, for example, an electrode pad formed at the bottom surface-side of the multilayer wiring structure (the build-up layer) 20b. In the present embodiment, the solder bump 22 is formed at plural positions of the bottom surface-side of the multilayer wiring structure 20b.

Next, as illustrated in Fig. 15B, a mask material (the mask layer, the sacrificing layer) 12c is provided onto the substrate 10a at which the multilayer wiring structures 20a and 20b are formed. As the mask material 12c, for example, a resin sheet (resin film) is used. The mask material 12c made from the resin sheet is provided onto the substrate 10a to be in close contact with the substrate 10a. Here, resin tape, which corresponds to the resin sheet (resin film) of which one surface is provided with an adhesion layer, is used as the mask material 12c. As the resin tape, for example, Mylar (registered trademark) tape (product name: Black Metalized Mylar (registered trademark) Tape, model number: S-15881BL) manufactured by U-LINE is used. Thickness of the mask material 12c is, for example, approximately 50 µm. As described above, the mask material 12c is provided onto the substrate 10a at which the multilayer wiring structures 20a and 20b are formed.

A processing threshold of the mask material 12c by the laser beam is desirably equal to the processing threshold of the substrate 10a by the laser beam or is lower than the processing threshold of the workpiece 10a by the laser beam. This is because, in a case where the processing threshold of the substrate 10a is lower than the processing threshold of the mask material 12c, the substrate 10a is susceptible to the ablation processing more easily than the mask material 12c, and therefore it is difficult to make the processed shape of the substrate 10a to follow a processed shape of the mask material 12c. As described above, the processing threshold of Mylar (registered trademark) is lower than the processing threshold of silicon. Consequently, in a case where the silicon is used as the material of the substrate 10a and Mylar (registered trademark) is used as the material of the mask material 12c, the processing threshold of the mask material 12c is lower than the processing threshold of the workpiece 10a.

It is desirable that thickness of the mask material 12c is set large, that is, thick, enough for the following reason. That is, as the laser beam is irradiated to the mask material 12c, the opening portion 14a including the shape or configuration of which the upper portion is widely opened is formed in the mask material 12c. In a case where the thickness of the mask material 12c is relatively small, the opening size of the opening portion 14a at the bottom surface of the mask material 12c is relatively large. The configuration of the opening 16 formed in the workpiece 10a follows the configuration of the opening portion 14a formed in the mask material 12c. Thus, in a case where the thickness of the mask material 12c is relatively small, the opening 16a formed at the workpiece 10a includes the configuration widely opened at the upper portion of the workpiece 10a. Consequently, in a case where the thickness of the mask material 12c is relatively small, it is difficult to cut the workpiece 10a with a processed width that is narrow enough. For the above-described reason, the thickness of the mask material 12c is desirably set to be large enough. For example, the thickness of the mask material 12c is desirably equal to or larger than 10 µm. Further, the thickness of the mask material 12c is desirably equal to or larger than 20 µm, for example. Further, the thickness of the mask material 12c is desirably equal to or larger than 30 µm, for example. Here, the thickness of the mask material 12c is, for example, approximately 50 µm.

In a case where the thickness of the mask material 12c is set excessively thick, however, it takes a long period of time for the processing. Accordingly, it is desired that the thickness of the mask material 12c is set appropriately. For example, the thickness of the mask material 12c is desirably equal to or smaller than 150 µm.

The material of the mask material 12c is not limited to the resin and may be appropriately set. In addition, a method of providing or placing the mask material 12c onto the substrate 10a is not limited to the adhesion and may be appropriately specified.

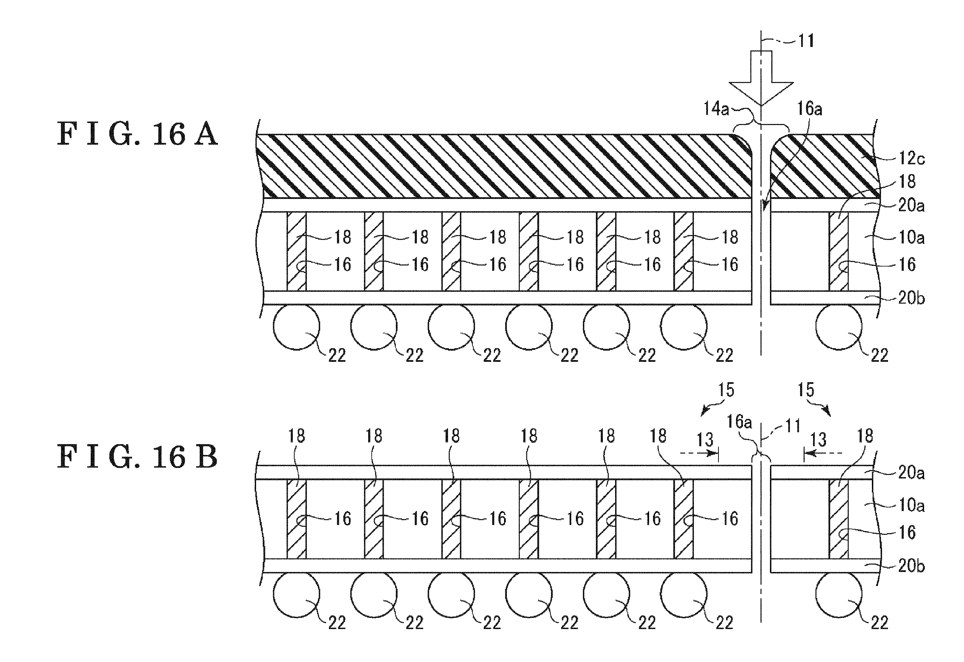

Next, in a state where the mask material 12c exists on the substrate 10a, the laser light (the laser beam) is scanned from above the substrate 10a (refer to Fig. 16A). For example, the irradiation of the laser beam may be performed with the use of the laser processing apparatus described above with reference to Fig. 1. The laser beam is scanned along the planned cutting lines 11 (refer to Fig. 12). As the laser beam, for example, the ultrashort-pulse laser is used. Here, for example, the femtosecond laser including the pulse width of approximately 700 fs is used as the laser beam. The wave length of the laser beam is, for example, approximately 1045 nm. The spot size of the laser beam is, for example, approximately φ40 µm. The irradiation power of the laser beam is set to be higher than the processing threshold of the mask material 12c and to be higher than the processing threshold of the workpiece 10a. Here, the irradiation power of the laser beam is, for example, approximately 10 W. Thus, the substrate 10a is cut with the extremely narrow processed width.

The pulse width, the wave length, the spot size, the irradiation power and the like of the laser beam are not limited to the above-described values and may be appropriately set.

As described above, the electronic component according to the present embodiment, that is, the interposer 15 according to the present embodiment, is manufactured (refer to Fig. 16B).

After this, a semiconductor device 24 is implemented on the interposer 15 of the present embodiment as illustrated in Fig. 17. The semiconductor device 24 and the interposer 15 are electrically connected to each other with the use of a solder bump 26. More specifically, an electrode pad formed at a lower surface of the semiconductor device 24 and another electrode pad formed at an upper portion of the multilayer wiring structure 20a of the interposer 15 are electrically connected to each other via the solder bump 26. In the present embodiment, the solder bump 26 is formed at plural positions.

As described above, the electronic device according to the present embodiment is manufactured.

The electronic device may be constituted by further stacking or building up the interposer and/or the semiconductor device appropriately.

Modified embodiments will be described below. The present disclosure is not limited to the aforementioned embodiments and various modifications may be made thereto.

For example, in the third embodiment, the explanation is made on the case where the electronic component is manufactured, however, the present disclosure is applicable to cases where various products (articles) are manufactured. For example, the present disclosure may be applied to a case where a hole is formed at an injection needle.

In addition, in the aforementioned embodiments, the explanation is made on the cases where the ultrashort-pulse laser is used as the laser beam irradiated at the workpiece, however, the laser beam irradiated at the workpiece is not limited to the ultrashort-pulse laser. A laser beam that can perform the ablation processing relative to the workpiece may be used appropriately. For example, as the laser beam irradiated at the workpiece, a long-pulse laser may be used.

In addition, in the second embodiment, the explanation is made on the case where the laser processing, which is described above with reference to Figs. 9C to 10B, is repetitively performed while the laser beam irradiation portion is moved along the planned cutting lines 11, and accordingly the workpiece 10a is cut. However, the present disclosure is not limited thereto. For example, the workpiece 10a may be cut in a manner that the scanning of the laser beam along the planned cutting lines 11 is performed for plural times.

## Claims

1. A laser processing method comprising steps of:
providing a mask material (12, 12a, 12b, 12c) of which thickness is equal to or greater than 10 µm onto an object (10, 10a); and
forming a hole (16, 16a) in the object (10, 10a) or cutting the object (10, 10a) in a state where the mask material (12, 12a, 12b, 12c) is provided on the object (10, 10a), in a manner that an ultrashort-pulse laser light is irradiated from above the object (10, 10a) and an opening portion (14, 14a) is formed at the mask material (12, 12a, 12b, 12c) to penetrate the mask material (12, 12a, 12b, 12c) while ablation processing is performed to a portion of the object (10, 10a) by the ultrashort-pulse laser light, the portion of the object (10, 10a) being below the opening portion (14, 14a).

2. The laser processing method according to claim 1, wherein the mask material (12) made of low-melting-point alloy is provided onto the object (10) in the step of providing the mask material (12).

3. The laser processing method according to claim 1, wherein the mask material (12a, 12b, 12c) corresponding to resin sheet is provided onto the object (10a) to be in close contact with the object (10a) in the step of providing the mask material (12a, 12b, 12c).

4. The laser processing method according to claim 2, wherein the low-melting-point alloy is melted at a temperature that is higher than a melting point of the low-melting-point alloy and the melted low-melting-point alloy is applied onto the object (10) in the step of providing the mask material (12).

5. The laser processing method according to claim 4, comprising a step of:
removing the mask material (12) with the use of water heated to a temperature that is higher than the melting point of the mask material (12) in a state where the mask material (12) is provided on the object (10).

6. The laser processing method according to either claim 4 or 5, wherein a resin sheet, opaque resin tape, or thermally foaming adhesive film configured to be removed when heated is used as the mask material (12a, 12b, 12c).

7. The laser processing method according to claim 4, wherein irradiation power of the ultrashort-pulse laser light is higher than a processing threshold of the mask material (12, 12a, 12b, 12c) and is higher than a processing threshold of the object (10, 10a).

8. A laser processing apparatus (100) used in the laser processing method according to any one of claims 1 to 7.
